(19) Europäisches Patentamt
European Patent Office
Office européen des brevets

(11) Veröffentlichungsnummer: **0 391 196 A2**

(12) **EUROPÄISCHE PATENTANMELDUNG**

(21) Anmeldenummer: **90105715.8**

(22) Anmeldetag: **26.03.90**

(51) Int. Cl.5: **C08G 69/02, C08G 69/12, C08G 69/32, C08G 69/36**

(30) Priorität: **06.04.89 DE 3911210**

(43) Veröffentlichungstag der Anmeldung: **10.10.90 Patentblatt 90/41**

(84) Benannte Vertragsstaaten: **DE FR GB NL**

(71) Anmelder: **Siemens Aktiengesellschaft**
**Wittelsbacherplatz 2**
**D-8000 München 2(DE)**

(72) Erfinder: **Ahne, Hellmut, Dr.**
**Heidestrasse 6**
**D-8551 Röttenbach(DE)**
Erfinder: **Hammerschmidt, Albert, Dr.**
**Coburger Strasse 47a**
**D-8520 Erlangen(DE)**
Erfinder: **Bäuerlein, Peter, Dipl.-Ing.**
**Neuweiler 14**
**D-8813 Schillingsfürst(DE)**

(54) **Herstellung von Hydroxypolyamiden.**

(57) Hydroxypolyamide können präparativ einfach und kostengünstig auf chloridfreiem Weg erhalten werden, wenn

(a) aromatische Aminohydroxycarbonsäuren oder

(b) aromatische Diaminodihydroxyverbindungen und aromatische Dicarbonsäuren oder

(c) aromatische Diaminodihydroxyverbindungen, aromatische Dicarbonsäuren und aromatische Aminohydroxycarbonsäuren in Gegenwart von 1-Ethoxycarbonyl-2-ethoxy-1.2-dihydrochinolin, 1.1′-Carbonyldioxy-di-1.2.3-benzotriazol oder Dicyclohexylcarbodiimid/1-Hydroxy-1.2.3-benzotriazol umgesetzt werden.

EP 0 391 196 A2

## Herstellung von Hydroxypolyamiden

Die Erfindung betrifft ein Verfahren zur Herstellung von Hydroxypolyamiden.

Hydroxypolyamide dienen als lösliche oligomere und/oder polymere Polybenzoxazol-Vorstufen in wärmebeständigen Photoresists zur Herstellung hochwärmebeständiger Reliefstrukturen, d.h. zur kostengünstigen direkten Strukturierung organischer Isolierschichten. Von Isolierstoffen, die in mikroelektronischen Bauteilen verbleiben, wird neben einer hohen thermischen Belastbarkeit (> 450 °C) und sehr guten elektrischen Kennwerten auch eine sehr hohe Reinheit gefordert. So soll beispielsweise der Gehalt an Chloridionen deutlich unter 3 ppm liegen. Chloridionen beeinträchtigen nämlich das elektrische Verhalten und sie können durch Korrosionsvorgänge die Langzeitstabilität der Bauteile negativ beeinflussen.

Lösliche - und damit gut verarbeitbare - Polybenzoxazol-Vorstufen in Form von Hydroxypolyamiden, die durch eine Temperaturbehandlung in hochtemperaturbeständige Polybenzoxazole übergeführt werden, sind beispielsweise aus der EP-PS 0 023 662, der EP-OS 0 291 779 und der DE-OS 37 16 629 bekannt; sie werden vor allem ausgehend von aromatischen Diaminodihydroxyverbindungen und aromatischen Dicarbonsäurechloriden hergestellt. Um den in der Mikroelektronik geforderten niedrigen Grad an ionischen Verunreinigungen zu erreichen, ist es dabei meistens erforderlich, umfangreiche Reinigungsoperationen mittels Ionenaustauschern durchzuführen. Hierbei handelt es sich aber einerseits um arbeits- und kostenintensive Verfahren, andererseits können dabei organische Verunreinigungen, beispielsweise aus Anionenaustauschern stammende Amine, in das Harzmaterial gelangen und dessen Eigenschaften negativ beeinflussen.

Eine chloridfreie Synthese von Polybenzoxazol-Vorstufen ist aus der EP-OS 0 158 726 bekannt. Hierbei werden Diaminodihydroxyverbindungen in Gegenwart eines Carbodiimids mit Dicarbonsäuren zur Reaktion gebracht. Bei dieser Umsetzung bereiten allerdings Harnstoffreste, die aufgrund einer Umlagerungsreaktion am Harz verbleiben, Schwierigkeiten; sie beeinträchtigen nämlich die thermische Beständigkeit der Polybenzoxazol-Vorstufen und die Beschaffenheit von daraus hergestellten Schichten.

Aufgabe der Erfindung ist es, ein Verfahren anzugeben, das einen präparativ einfachen und kostengünstigen Zugang zu Hydroxypolyamiden auf chloridfreiem Weg ermöglicht.

Dies wird erfindungsgemäß dadurch erreicht, daß

(a) aromatische Aminohydroxycarbonsäuren oder

(b) aromatische Diaminodihydroxyverbindungen und aromatische Dicarbonsäuren oder

(c) aromatische Diaminodihydroxyverbindungen, aromatische Dicarbonsäuren und aromatische Aminohydroxycarbonsäuren in Gegenwart von 1-Ethoxycarbonyl-2-ethoxy-1.2-dihydrochinolin, 1.1′-Carbonyldioxy-di-1.2.3-benzotriazol oder Dicyclohexylcarbodiimid/1-Hydroxy-1.2.3-benzotriazol zu Verbindungen folgender Struktur umgesetzt werden:

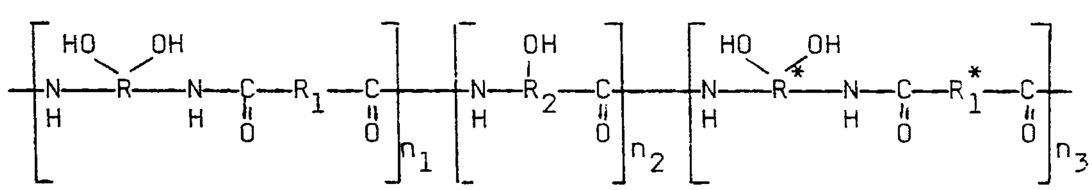
,

wobei R, $R^*$, $R_1$′ $R_1^*$ und $R_2$ aromatische Gruppen sind und bezüglich $n_1$, $n_2$ und $n_3$ folgendes gilt:

$n_1$ und $n_2$ = 1 bis 100, $n_3$ = 0 oder

$n_2$ = 1 bis 100, $n_1$ und $n_3$ = 0 oder

$n_1$, $n_2$ und $n_3$ = 1 bis 100 (mit $R \neq R^*$ und/oder $R_1 \neq R_1^*$) oder

$n_1$ und $n_3$ = 1 bis 100, $n_2$ = 0 (mit $R \neq R^*$ und/oder $R_1 \neq R_1^*$).

Das erfindungsgemäße Verfahren, bei dem - für die Kondensationsreaktion zwischen Aminogruppen und Carboxylgruppen - spezielle Reagenzien eingesetzt werden, liefert die gewünschten Polybenzoxazol-Vorstufen in guter Ausbeute; dies zeigt sich insbesondere anhand spektroskopischer Untersuchungen, wie IR-und NMR-Messungen. Diese Tatsache ist aber sehr überraschend, und zwar aus folgendem Grund. In der organischen Synthese und in der Peptidchemie sind eine Reihe von Reagenzien entwickelt worden, welche spezielle Veresterungen, beispielsweise von sterisch gehinderten Alkoholen, und die Knüpfung von Peptidbindungen erlauben, darunter 1-Ethoxycarbonyl-2-ethoxy-1.2-dihydrochinolin und 1.1′-Carbonyldioxy-di-1.2.3-benzotriazol. Wie entsprechende spektroskopische Untersuchungen gezeigt haben, führen diese Reagenzien, mit Ausnahme derjenigen, die beim erfindungsgemäßen Verfahren Verwendung finden, aber nicht zu den gewünschten Polymer-Vorstufen.

Das erfindungsgemäße Verfahren erlaubt es, daß bei der Herstellung von Hydroxypolyamiden - anstelle von Säurechloriden - von den entsprechenden Carbonsäuren ausgegangen werden kann. Auf Reinigungsschritte, insbesondere unter Verwendung von Ionenaustauschern, kann deshalb verzichtet werden, so daß eine präparativ einfache und kostengünstige Synthese ermöglicht wird.

Beim erfindungsgemäßen Verfahren wird die Umsetzung zwischen den aminofunktionellen Hydroxyverbindungen und den Carbonsäuren vorteilhaft in einem organischen Lösungsmittel durchgeführt. Als Lösungsmittel wird dabei vorzugsweise N-Methylpyrrolidon und/oder Pyridin verwendet. Die Umsetzung selbst erfolgt vorteilhaft bei Temperaturen von Raumtemperatur bis ca. 60 °C.

Die nach dem erfindungsgemäßen Verfahren hergestellten Hydroxy polyamide weisen vorzugsweise aromatische Gruppen folgender Struktur auf.

R und R* können folgende Bedeutung haben:

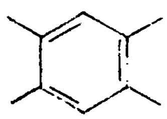 , 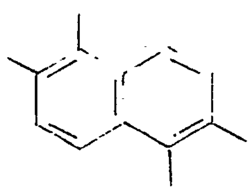 , 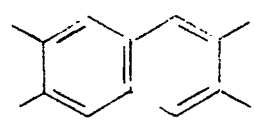 ,

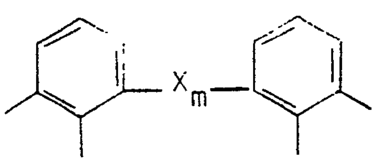 , 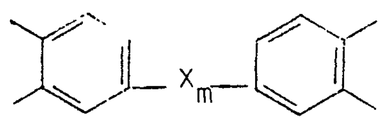 ,

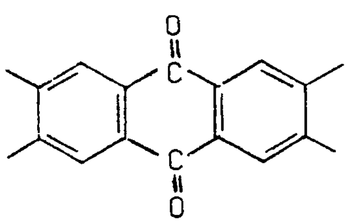 , 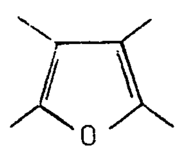 , 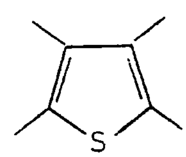 und

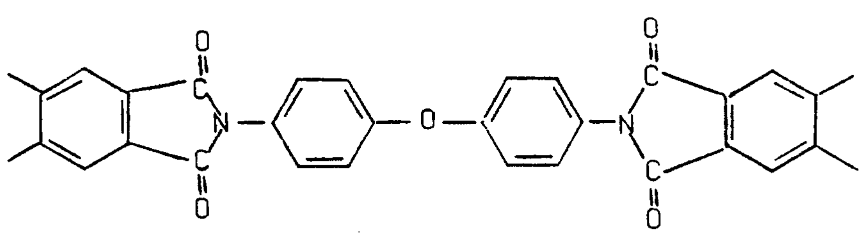 .

$R_1$ und $R_1^*$ können folgende Bedeutung haben, wobei H-Atome auch durch Cl oder Br substituiert sein können:

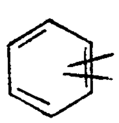 , 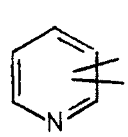 , 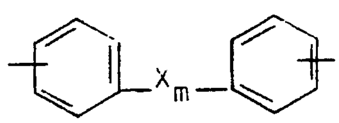 und 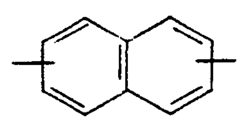 .

$R_2$ kann folgende Bedeutung haben:

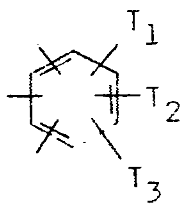, 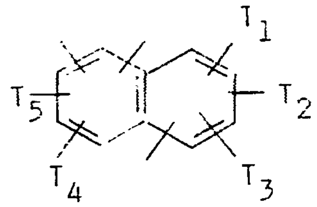, 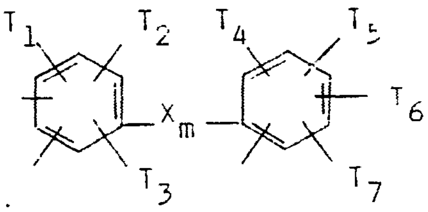.

Dabei bedeuten $T_1$ bis $T_7$ H oder Alkyl, m = 0 oder 1, und X bedeutet:

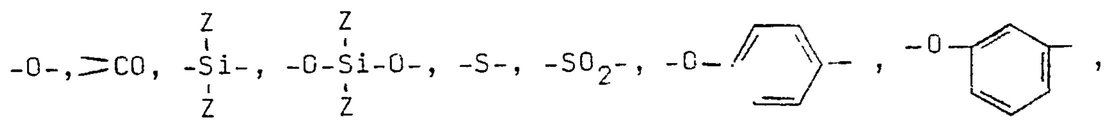

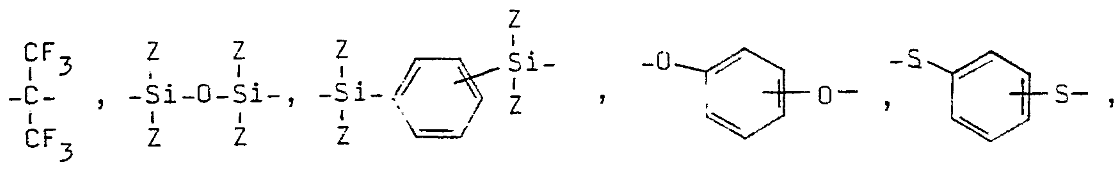

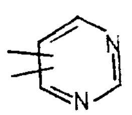 und $-(CF_2)_r-$ ;

dabei gilt folgendes:
Z = Alkyl mit 1 bis 10 Kohlenstoffatomen oder Aryl, und
r = 2 bis 18.

Anhand von Ausführungsbeispielen soll die Erfindung noch näher erläutert werden.

Beispiel 1: Umsetzung von Isophthalsäure mit 3.3′-Dihydroxybenzidin

8,32 Masseteile 1-Ethoxycarbonyl-2-ethoxy-1.2-dihydrochinolin und 2,79 Masseteile Isophthalsäure, gelöst in 15 Masseteilen N-Methylpyrrolidon, werden in einem mit einem Rührer, einem Tropftrichter und einem Trockenrohr versehenen 250 ml-Dreihalskolben 75 min bei Raumtemperatur unter einer Argonatmosphäre gerührt. Anschließend wird eine Lösung von 3,64 Masseteilen 3.3′-Dihydroxybenzidin in 30 Masseteilen N-Methylpyrrolidon zugetropft und nachfolgend 6 h bei Raumtemperatur gerührt; dann wird die Lösung noch 12 h bei Raumtemperatur stehengelassen. Zur Isolierung des Harzes wird die Reaktionsmischung in 500 Masseteile Methanol gegossen, dann wird mehrmals mit dem Fällungsmittel gewaschen und anschließend im Vakuum (bei einem Druck von ca. 270 mbar) bei Raumtemperatur über $CaCl_2$ und NaOH getrocknet; Ausbeute: 3,6 Masseteile (62 % der Theorie). Die Viskositätszahl beträgt 12,5 ml/g (1 %ige Lösung in N-Methylpyrrolidon bei 23 °C).

Beispiel 2: Umsetzung von Isophthalsäure mit 3.3′-Dihydroxybenzidin und 3.3′-Diamino-4.4′-dihydroxydiphenyl-1.1.1.3.3.3-hexafluorpropan

50 Masseteile 1-Ethoxycarbonyl-2-ethoxy-1.2-dihydrochinolin und 16,8 Masseteile Isophthalsäure, gelöst in 90 Masseteilen N-Methylpyrrolidon, werden in einem mit einem Rührer, einem Rückflußkühler, einem Tropftrichter und einem Trockenrohr versehenen 1 1-Dreihalskolben 45 min bei Raumtemperatur unter einer Argonatmosphäre gerührt. Anschließend wird auf 50 °C erwärmt und eine Lösung von 10,94 Masseteilen 3.3′-Dihydroxybenzidin und 17,48 Masseteilen 3.3′-Diamino-4.4′-dihydroxydiphenyl-1.1.1.3.3.3-hexafluorpropan in 150 Masseteilen N-Methylpyrrolidon zugetropft. Nachfolgend wird die Lösung 5 h bei 50 °C gerührt und dann noch 12 h bei Raumtemperatur stehengelassen. Das Harz wird durch Ausfällen in 4000 Masseteilen eines Gemisches von Wasser und Methanol (im Verhältnis 2:1) und anschließendes Absaugen isoliert, dann wird mehrmals mit Wasser gewaschen und anschließend im Vakuum (bei einem

Druck von ca. 270 mbar) bei Raumtemperatur über NaOH getrocknet; Ausbeute: 26,6 Masseteile (63 % der Theorie). Die Viskositätszahl beträgt 8,7 ml/g (1 %ige Lösung in N-Methylpyrrolidon bei 23 °C).

Beispiel 3: Umsetzung von Isophthalsäure mit 3.3′-Dihydroxybenzidin

10,06 Masseteile 1.1′-Carbonyldioxy-di-1.2.3-benzotriazol, 2,65 Masseteile Pyridin und 2,82 Masseteile Isophthalsäure in 15 Masseteilen N-Methylpyrrolidon werden unter einer Argonatmosphäre in einen mit einem Rührer, einem Rückflußkühler, einem Tropftrichter und einem Trockenrohr versehenen 250 ml-Dreihalskolben eingebracht. Es setzt sofort eine $CO_2$-Entwicklung ein, die nach ca. 5 min beendet ist. Die Mischung wird dann 20 min bei Raumtemperatur gerührt, anschließend wird auf 60 °C erwärmt und eine Lösung von 3,68 Masseteilen 3.3′-Dihydroxybenzidin in 25 Masseteilen N-Methylpyrrolidon zugetropft. Dann wird die Lösung 4 h bei 60 °C gerührt und anschließend noch 12 h bei Raumtemperatur stehengelassen. Das Harz wird in 1100 Masseteilen Methanol ausgefällt, der Niederschlag abgesaugt, mehrmals mit Methanol gewaschen und bei Raumtemperatur über NaOH getrocknet; Ausbeute: 4,5 Masseteile (77 % der Theorie). Die Viskositätszahl beträgt 23,7 ml/g (1 %ige Lösung in N-Methylpyrrolidon bei 23 °C).

Beispiel 4: Umsetzung von Isophthalsäure mit 3.3′-Dihydroxybenzidin

5,67 Masseteile Dicyclohexylcarbodiimid werden zusammen mit 5,4 Masseteilen 1-Hydroxy-1.2.3-benzotriazol in 30 Masseteilen N-Methylpyrrolidon gelöst. Zu dieser Mischung wird unter Rühren eine Lösung von 2,08 Masseteilen Isophthalsäure in 30 Masseteilen N-Methylpyrrolidon zugetropft und anschließend wird 30 min gerührt. Dann werden unter Rühren 2,7 Masseteile 3.3′-Dihydroxybenzidin zugetropft, anschließend wird 2 h gerührt und der ausgefallene Dicyclohexylharnstoff von der Reaktionslösung abfiltriert. Das Filtrat wird unter Rühren in 600 Masseteile Eiswasser getropft, der ausgefallene Feststoff abgesaugt, mehrmals mit Wasser gewaschen und anschließend im Vakuumtrockenschrank (bei einem Druck von ca. 270 mbar) über NaOH getrocknet; Ausbeute: 4,3 Masseteile (90 % der Theorie). Die Viskositätszahl beträgt 13,27 ml/g (1 %ige Lösung in N-Methylpyrrolidon bei 23 °C).

## Ansprüche

1. Verfahren zur Herstellung von Hydroxypolyamiden, **dadurch gekennzeichnet,** daß
(a) aromatische Aminohydroxycarbonsäuren oder
(b) aromatische Diaminodihydroxyverbindungen und aromatische Dicarbonsäuren oder
(c) aromatische Diaminodihydroxyverbindungen, aromatische Dicarbonsäuren und aromatische Aminohydroxycarbonsäuren
in Gegenwart von 1-Ethoxycarbonyl-2-ethoxy-1.2-dihydrochinolin, 1.1′-Carbonyldioxy-di-1.2.3-benzotriazol oder Dicyclohexylcarbodiimid/1-Hydroxy-1.2.3-benzotriazol zu Verbindungen folgender Struktur umgesetzt werden:

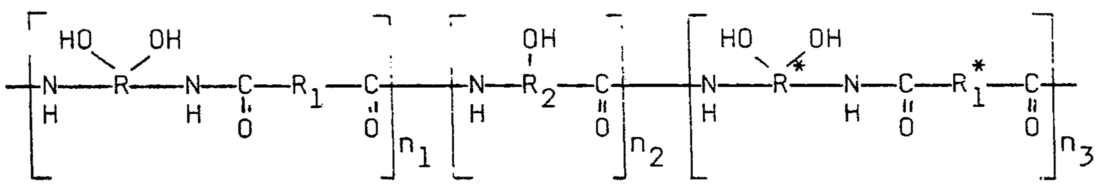
,

wobei R, R*, $R_1$, $R_1^*$ und $R_2$ aromatische Gruppen sind und bezüglich $n_1$, $n_2$ und $n_3$ folgendes gilt:
$n_1$ und $n_2$ = 1 bis 100, $n_3$ = 0 oder
$n_2$ = 1 bis 100, $n_1$ und $n_3$ = 0 oder
$n_1$, $n_2$ und $n_3$ = 1 bis 100 (mit R ≠ R* und/oder $R_1 \neq R_1^*$) oder
$n_1$ und $n_3$ = 1 bis 100, $n_2$ = 0 (mit R ≠ R* und/oder $R_1 \neq R_1^*$).

2. Verfahren nach Anspruch 1, **dadurch gekennzeichnet,** daß die Umsetzung in einem organischen Lösungsmittel durchgeführt wird.

3. Verfahren nach Anspruch 2, **dadurch gekennzeichnet,** daß als Lösungsmittel N-Methylpyrrolidon

und/oder Pyridin verwendet wird.

4. Verfahren nach einem der Ansprüche 1 bis 3, **dadurch gekennzeichnet,** daß die Umsetzung bei Temperaturen von Raumtemperatur bis ca. 60 °C erfolgt.